# NEUE EUROPÄISCHE PATENTSCHRIFT

(11) **EP 3 247 015 B2**
(45) Veröffentlichungstag und Bekanntmachung des Hinweises auf die Entscheidung über den Einspruch: **23.11.2022**
(45) Hinweis auf die Patenterteilung: 23.10.2019
(21) Anmeldenummer: 16170171.9
(22) Anmeldetag: 18.05.2016
(51) Int. Cl.: H02J 1/06

(54) **STROMVERSORGUNGSEINRICHTUNG UND VERFAHREN ZUM BETREIBEN EINER STROMVERSORGUNGSEINRICHTUNG**
POWER SUPPLY DEVICE AND METHOD FOR OPERATING A POWER SUPPLY DEVICE
DISPOSITIF D'ALIMENTATION ÉLECTRIQUE ET PROCÉDÉ DE FONCTIONNEMENT D'UN DISPOSITIF D'ALIMENTATION ÉLECTRIQUE

(43) Veröffentlichungstag der Anmeldung: 22.11.2017
(60) Teilanmeldung: 18190273.5
(73) Patentinhaber: Thales Management & Services Deutschland GmbH, 71254 Ditzingen (DE)
(72) Erfinder: ZURFLUH, Erwin, 8706 Meilen (CH); STÄUBLE, Roland, 8050 Zürich (CH); SCHWEHN, Oliver, 71636 Ludwigsburg (DE); LAMPEL, Martin, 1200 Wien (AT)
(74) Vertreter: Kohler Schmid Möbus Patentanwälte

(56) Entgegenhaltungen:
- WO-A1-2015/000757
- DE-A1-102010 030 821
- DE-A1-102013 225 815
- US-A- 5 962 929

## Beschreibung

### Hintergrund der Erfindung

Die Erfindung betrifft eine Stromversorgungseinrichtung zur Versorgung mehrerer Verbraucher mit Gleichstrom. Die Erfindung betrifft darüber hinaus ein Verfahren zum Betreiben der Stromversorgungseinrichtung.

Eine derartige Stromversorgungseinrichtung ist bspw. bekannt aus DE 10 2010 030 821 A1.

Verbraucher von bahntechnischen Signalanlagen werden üblicherweise über einen zentralen Punkt (Stellwerk) mit Strom versorgt. Die Energieversorgung der Feldelemente erfolgt durch Anschalten der Systeme im Stellwerk.

DE 10 2013 225 815 A1 offenbart eine Stromversorgungseinrichtung, mit der die Stromversorgung über eine Busleitung eines Energiebusses erfolgt.

Die Energieverteilung verschiebt sich somit entlang des Energiebusses. Auf diese Weise kann eine kosteneffiziente Stromverteilung über große Distanzen (hier: Distanzen von 20-50 km) erfolgen, da Bussysteme mit statistisch verteilten Leistungsschwankungen über die Strecke bei einem gegebenen Einsatz von metallischen Leitern (insbes. Kupfer oder Aluminium) materialeffizienter umgehen können. Fehler in der Stromverteilung können aber nicht mehr im Stellwerk, sondern werden durch aktive Elemente des Energiebus-Systems gehandhabt.

Herausfordernd ist die Gesamtverfügbarkeit, weil viele Verbraucher (Feldelemente) an einer Busleitung angeschlossen sind. Aufgrund der vielen Verbraucher entsteht beim Anschalten (Hochfahren der verteilten Stromversorgungen der Verbraucher (Feldelemente)) ein extrem hoher Einschaltstrom.

Durch den materialeffizienten Einsatz von metallischen Leitern ist die Busleitung im Vergleich zu herkömmlichen Energieverteilsystemen hochohmiger, sodass Leistungsschwankungen größere Spannungsschwankungen hervorrufen.

US 5,962,929 offenbart ein Stromversorgungssystem, wobei die zu versorgenden Lasten mit der Stromversorgung in Serie geschaltet sind. Über einen Schalter. Im Falle eines Kurzschlusses innerhalb einer Last wird diese Last überbrückt, so dass stets alle Lasten mit Strom versorgt werden.

DE 10 2010 030 821 A1 offenbart eine Vorrichtung zur Inbetriebnahme von parallel geschalteten Feldgeräten, die über eine einzige Versorgungsquelle betrieben werden. Die Vorrichtung umfasst eine Starterschaltung, die dazu dient, ein auf ein vorhergehendes Feldgeräte folgendes Feldgerät zumindest solange von der Spannungsversorgung zu trennen, bis das vorhergehende Feldgerät einen im Wesentlichen konstanten Strom aufnimmt, der zum Betreiben des vorhergehenden Feldgerätes in einem bestimmten Betriebsmodus dient.

### Aufgabe der Erfindung

Es ist Aufgabe der Erfindung eine Stromversorgungseinrichtung vorzuschlagen, bei der einerseits die Verbraucher über eine Busleitung, insbesondere auch im Fehlerfall, betriebssicher mit Strom versorgt werden können und andererseits auch bei vielen Verbrauchern der Einschaltstrom und somit der Spannungseinbruch unter Kontrolle gehalten werden kann.

### Beschreibung der Erfindung

Diese Aufgabe wird erfindungsgemäß durch eine Stromversorgungseinrichtung gemäß Patentanspruch 1 und durch ein Verfahren gemäß Patentanspruch 10 gelöst. Vorteilhafte Ausführungsformen sind Gegenstand derabhängigen Ansprüche.

Ein "Energiebus" bezeichnet eine aufeinanderfolgende Anordnung mehrerer Verbraucher entlang einer (2-poligen) Busleitung mit einer gemeinsamen Einspeisung. Gemäß der vorliegenden Erfindung umfasst der Energiebus neben der Busleitung auch Verbraucher-Busankoppelelemente, die entlang der Busleitung, also hintereinander, angeordnet sind und die Busleitung in Bussegmente unterteilt, sowie je nach Anzahl der Speisungen (Gleichstromquellen) Einspeise-Busankoppelelemente, über die Strom von der Gleichstromquelle(n) in die Busleitung eingespeist werden kann. Ein Energiebus kann eine lineare (offene Busleitung) oder eine ringförmige (geschlossene Busleitung) Topologie aufweisen. Der Stromfluss innerhalb des Energiebusses erfolgt bidirektional.

Die Busleitung ist durch Verbraucher-Busankoppelelementen in Bussegmente unterteilt, wobei jedes Verbraucher-Busankoppelelement Schaltelemente zur elektrischen Trennung der Busleitung umfasst, so dass die Busankoppelelemente jeweils in einen Grundzustand und/oder einen ersten Betriebszustand, in dem die Busleitung durch das entsprechende Verbraucher-Busankoppelelement elektrisch unterbrochen ist, und in einen zweiten Betriebszustand, in dem die Bussegmente durch das entsprechende Verbraucher-Busankoppelelement elektrisch verbunden sind, gebracht werden können, und dass mindestens einer der Verbraucher an einem der Verbraucher-Busankoppelelemente angeschlossen ist und somit diesen Verbraucher versorgt. Innerhalb einer Busleitung können beliebig viele Verbraucher-Busankoppelelemente angeordnet sein.

An mindestens einem Verbraucher-Busankoppelelement ist ein Verbraucher angeschlossen, so dass dieser vom Verbraucher-Busankoppelelement versorgt wird, wobei die Verbraucher-Busankoppelelemente i.A. funktionell unabhängig von den jeweiligen Verbrauchern sind. Es können jedoch auch Busankoppelelemente vorhanden sein, die keinen Verbraucher versorgen.

Die Verbraucher-Busankoppelelemente bilden Unterbrechungsstellen, an denen die Busleitung unterbrochen werden kann. Bei der Trennung/Unterbrechung der Busleitung handelt es sich um das Fehlen einer elektrisch leitenden Verbindung zwischen benachbarten Bussegmenten. Im Spannungspotentialbereich der Betriebsspannung wird hierdurch eine elektrische Isolierung erreicht.

Das erfindungsgemäße Trennen der Busleitung in mehrere Busleitungsabschnitte (Bussegmente) durch die Verbraucher-Busankoppelelemente (elektrisches Unterbrechen der Busleitung an Unterbrechungsstellen) ermöglicht ein sequentielles Anschalten der Verbraucher und somit eine Reduzierung der auftretenden Stromspitzen beim Anschalten der Verbraucher.

Als Schaltelemente können z.B. elektromechanische Relais oder auch elektronische Schaltelemente wie Thyristor, Transistoren und FETs zum Einsatz kommen.

Die Verbraucher-Busankoppelelemente umfassen erfindungsgemäß jeweils die vorgenannten Schaltelemente einen Klein-Prozessor zum Betreiben dieser Schaltelemente, Elektronik zur Leitungsdiagnose, sowie Filter und Schutzeinrichtungen. An der Schnittstelle zum Verbraucher betreibt der Kleinprozessor das Anschalten und die Überwachung der Weitbereichs-Stromversorgung des Verbrauchers als eigentliche Nutzlast.

Erfindungsgemäß handelt es sich bei den Verbrauchern um Komponenten der Leit- und Sicherungstechnik, insbesondere um Feldelemente, wobei die Verbraucher jeweils eine Logik oder einen Prozessor umfassen.

Die erfindungsgemäße Stromversorgungseinrichtung wird also vorzugsweise in der Bahntechnik, insbesondere in der Leit- und Sicherungstechnik verwendet.

Feldelemente sind Elemente, die entlang einer Schienenverkehrsstrecke angeordnet sind, insbesondere Weichen, Signale usw. Die Feldelemente umfassen vorzugsweise jeweils eine Weitbereichs-Stromversorgung (insbes. 450 VDC - 900 VDC; ca. 500 W - 1 kW), diverse Elektronik mit Prozessoren und einen Anschluss an das Datenkommunikationsnetzwerk.

Bei einer ersten bevorzugten Ausführungsform weist der Energiebus eine lineare Topologie auf und die erste Gleichstromquelle ist die einzige Gleichstromquelle des ersten Energiebusses. Dabei kann beispielsweise lediglich das erste Verbraucher-Busankoppelelement direkt (also ohne Zwischenschaltung eines weiteren mit einem Verbraucher bestückten Verbraucher-Busankoppelelements) mit der ersten Gleichstromquelle verbunden sein. Die weiteren Verbraucher-Busankoppelelemente schließen sich dann jeweils an das vorangehende Verbraucher-Busankoppelelement an (Einspeisepunkt an einem der beiden Enden des Energiebusses. Die Einspeisung von Strom erfolgt hier nur an einer einzigen Stelle. Bei einem Fehlerfall werden der ganze Bus oder Teile des Busses stromlos. Es ist jedoch auch möglich, die erste Gleichstromquelle an einer beliebigen Stelle des Energiebusses, z.B. zwischen zwei Verbraucher-Busankoppelelementen anzuordnen. Die Einspeisung von Strom in die Busleitung erfolgt dann von der einzigen Gleichstromquelle in zwei Richtungen.

Eine zweite Ausführungsform der erfindungsgemäßen Stromversorgungseinrichtung sieht vor, dass das erste und das n-te Verbraucher-Busankoppelelement direkt mit der ersten Gleichstromquelle verbunden sind, so dass der Energiebus eine ringförmige Topologie aufweist. Diese Ausführungsform ermöglicht eine beidseitige Einspeisung von Strom mittels nur einer Gleichstromquelle. Hierdurch können trotz Auftreten eines Fehlers in einem Segment der Busleitung sämtliche Verbraucher mit Strom versorgt werden (Fehlerbehebung erster Stufe).

Vorzugsweise ist die Busleitung mit einer weiteren (also eine zweite, ev. auch eine dritte, vierte usw.) Gleichstromquelle elektrisch verbunden (dritte und fünfte Ausführungsform).

Bei der dritten vorteilhaften Ausführungsform ist einer der Verbraucher-Busankoppelelemente, vorzugsweise das n-te Verbraucher-Busankoppelelement direkt mit der weiteren (insbesondere der zweiten) Gleichstromquelle verbunden. Bei dieser Ausführungsform weist der Energiebus eine lineare Topologie mit einer beidseitigen Einspeisung von Strom mittels zweier Gleichstromquellen auf.

Zum Zwecke einer erhöhten Verfügbarkeit ist es vorteilhaft, wenn mehr als eine weitere Gleichstromquelle (also insgesamt mehr als zwei Gleichstromquellen) mit der Busleitung elektrisch verbunden sind (dritte und fünfte Ausführungsform).

Ab dieser Variante kann eine Fehlerbehebung erster und fallweiser zweiter Stufe realisiert werden.

Erfindungsgemäß ist eine Buskoppeleinheit vorhanden, die den ersten Energiebus mit einem zweiten Energiebus koppelt. Eine Buskoppeleinheit verfügt über mindestens vier Anschlüsse (Kopplung von zwei Energiebussen) und kann beliebige elektrisch zulässige Stellungen (also insbesondere kurzschlussfreie paarweise Kopplungen der zweipoligen Busleitungen) einnehmen, auch Mehrfachstellungen.

Über dieselbe Koppeleinheit können auch mehr als zwei Energiebusse miteinander gekoppelt werden. Darüber hinaus kann eine Stromversorgungseinrichtung auch mehrere Koppeleinheiten umfassen, die jeweils mindestens zwei Energiebusse miteinander koppeln.

Im Falle einer ringförmigen Topologie der Energiebus(se) teilt die Buskoppeleinheit die ringförmige(n) Busleitung(en) benachbarter Energiebusse jeweils in einen ersten Leitungsabschnitt und einen zweiten Leitungsabschnitt. Bei Auftreten eines Fehlers sowohl im ersten Leitungsabschnitt als auch im zweiten Leitungsabschnitt eines Energiebusses können dann die durch die buseigene Gleichstromquelle nicht mehr versorgbaren Verbraucher durch die Gleichstromquelle des zweiten Busses versorgt werden (Fehlerbehebung zweiter Stufe). Die Buskoppeleinheit umfasst dazu bspw. weitere Schaltelemente zum elektrischen Verbinden des nicht mehr versorgbaren Leitungsabschnitts des ersten Energiebusses mit dem zweiten Energiebus.

Eine vierte Ausführungsform sieht dabei vor, dass der erste und der zweite Energiebus (vorzugsweise sämtliche Energiebusse der Stromversorgungseinrichtung) eine ringförmige Topologie aufweisen. Diese Ausführungsform ist insbesondere vorteilhaft, wenn große Distanzen mit hoher Verfügbarkeit überwunden werden müssen, bspw. zur Verbindung zweier Bahnnetze.

Eine fünfte und sechste Ausführungsform sieht vor, dass der erste und der zweite Energiebus (vorzugsweise sämtliche Energiebusse der Stromversorgungseinrichtung) jeweils eine lineare Topologie aufweisen. Diese Ausführungsform kann vorteilhaft zur Verbindung großer Gleisfelder verwendet werden.

Bei einer siebten Ausführungsform sind ein Energiebus mit ringförmiger Topologie und ein Energiebus mit linearer Topologie durch die Buskoppeleinheit miteinander gekoppelt.

Erfindungsgemäß weist das Verbraucher-Busankoppelelement sowohl an der negativen als auch an der positiven Potentialseite der Busleitung jeweils ein erstes Schaltelement zur elektrischen Trennung der Busleitung und ein zweites Schaltelement zum Zuschalten des Verbrauchers zum Energiebus auf, wobei die ersten Schaltelemente Teil der Busleitung und die zweiten Schaltelemente Teil einer im Verbraucher-Busankoppelelement integrierten, von der Busleitung zum Verbraucher führenden Versorgungsleitung sind.

Die Erfindung betrifft auch ein Verfahren zum Betreiben einer zuvor beschriebenen Stromversorgungseinrichtung, insbesondere in der Bahntechnik. Erfindungsgemäß werden die Verbraucher-Busankoppelelemente sequentiell vom Grundzustand zunächst durch Schließen der zweiten Schaltelemente in den ersten Betriebszustand und dann nach einer zeitlichen Verzögerung durch Schließen der ersten Schaltelemente in den zweiten Betriebszustand gebracht, so dass die Verbraucher-Busankoppelelemente sequentiell durch Versorgung mit Strom der Gleichstromquelle angeschaltet werden.

Vorzugsweise wird der Strom von der Gleichstromquelle beidseitig in die Busleitung eingespeist.

Dabei kann zur beidseitigen Einspeisung mindestens eine weitere Gleichstromquelle verwendet werden. Dies ermöglicht die Verwendung einer linearen Topologie des Energiebusses. Vorzugsweise werden mehr als zwei Gleichstromquellen verwendet. Durch Steuerung der Spannung der Gleichstromquellen kann somit im widerstandsbelasteten Bus eine Balancierung der Energieeinspeisung durchgeführt werden.

Alternativ hierzu kann zur beidseitigen Einspeisung ein Energiebus mit einer ringförmigen Topologie und einer einzigen Gleichstromquelle verwendet werden.

Die Gleichstromquellen speisen mittels jeweils eines Einspeise-Busankoppelelements Strom in den Energiebus. Innerhalb eines Energiebusses können beliebig viele Gleichstromquellen vorgesehen sein. Die Anzahl der Einspeise-Busankoppelelemente richtet sich nach der Anzahl der Gleichstromquellen.

Vorzugsweise umfassen die Einspeise-Busankoppelelemente eine Reihe von Schaltelementen und Dioden. Die Schaltelemente trennen den Bus an den Segmentgrenzen und erlauben eine kontrollierte, unabhängige Einspeisung des Stroms in die angrenzenden Busleitungen. Die Dioden bzw. gesteuerten Schalter entkoppeln die Speisung (Gleichstromquellen) bei Rückwärtsenergieeintrag (z.B. durch die Verwendung weiterer Gleichstromquellen bei kurzen Leitungen und unterschiedlichen Spannungen).

Alle beschriebenen Stromversorgungseinrichtungen können als potentialfreie IT (Isolé Terre)-Stromversorgungsnetze ausgebildet werden. Diese Netznorm wird vorzugsweise in der Bahntechnik, insbesondere in der Leit- und Sicherungstechnik verwendet.

Vorzugsweise werden im Falle eines defekten Segments der Busleitung (z.B. bei Unterbrechung oder Kurzschluss), die an dem defekten Segment angrenzenden Verbraucher-Busankoppelelemente in den ersten Betriebszustand versetzt. Die Busleitung wir also dann an der defekten Stelle unterbrochen. Aufgrund der beidseitigen Einspeisung können trotzdem alle Verbraucher mit Strom versorgt werden. Bei Kurzschluss in einem Bussegment wird das betroffene Bussegment also durch die benachbarten Verbraucher-Busankoppelelemente isoliert.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt einen Energiebus gemäß dem Stand der Technik.
- Fig. 2a: zeigt eine beispielhafte Stromversorgungseinrichtung mit einer ersten einseitig einspeisenden Gleichstromquelle und einem Energiebus mit linearer Topologie.
- Fig. 2b: zeigt ein Beispiel mit einer ersten an einer beliebigen Stelle zweiseitig einspeisenden Gleichstromquelle und einem Energiebus mit linearer Topologie.
- Fig. 3a: zeigt einen bevorzugten Aufbau eines Verbraucher-Busankoppelelements im Grundzustand
- Fig. 3b: zeigt einen bevorzugten Aufbau eines Verbraucher-Busankoppelelements im ersten Betriebszustand.
- Fig. 3c: zeigt einen bevorzugten Aufbau eines Verbraucher-Busankoppelelements im zweiten Betriebszustand.
- Fig. 4: zeigt einen bevorzugten Aufbau eines Einspeise-Busankoppelelements
- Fig. 5: zeigt eine beispielhafte Stromversorgungseinrichtung mit einer ersten Gleichstromquelle und einem Energiebus mit ringförmiger Topologie.
- Fig. 6a: zeigt eine beispielhafte Stromversorgungseinrichtung mit mehreren Gleichstromquellen und einem Energiebus mit linearer Topologie.
- Fig. 6b: zeigt die Stromversorgungseinrichtung mit zwei Gleichstromquellen, bei der sich alle Verbraucher-Busankoppelelemente im zweiten Betriebszustand befinden.
- Fig. 6c: zeigt die Stromversorgungseinrichtung mit zwei Gleichstromquellen, bei der ein Bussegment aufgrund eines Kurzschlusses isoliert ist.
- Fig.7a: zeigt einen Ausschnitt einer Ausführungsform der erfindungsgemäßen Stromversorgungseinrichtung mit zwei gekoppelten Energiebussen mit ringförmiger Topologie.
- Fig. 7b: zeigt die erfindungsgemäße Stromversorgungseinrichtung gemäß Fig. 7a mit einem unterbrochenen Segment im Hauptleitungsabschnitt.
- Fig. 7c: zeigt die erfindungsgemäße Stromversorgungseinrichtung gemäß Fig. 7a mit einem unterbrochenen Segment im Hauptleitungsabschnitt und einer weiteren Unterbrechung im Rückleitungsabschnitt.
- Fig. 8: zeigt eine Ausführungsform der erfindungsgemäßen Stromversorgungseinrichtung mit zwei gekoppelten Energiebussen mit linearer Topologie und mehreren Gleichstromquellen.
- Fig.9: zeigt eine Ausführungsform der erfindungsgemäßen Stromversorgungseinrichtung mit mehreren sternförmig angeschlossenen Energiebusse in linearer Topologie und einer zentralen Netzkoppeleinheit.
- Fig. 10: zeigt eine Ausführungsform der erfindungsgemäßen Stromversorgungseinrichtung, bei der ein Energiebus mit linearer Topologie mit einem Energiebus mit ringförmiger Topologie gekoppelt ist.

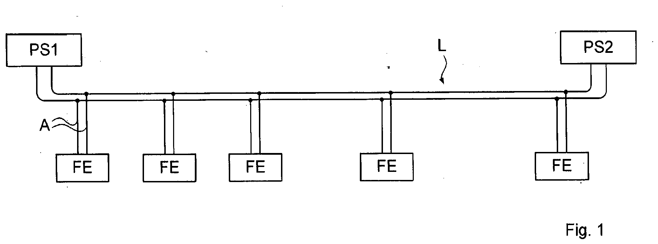

**Fig. 1** zeigt einen Energiebus gemäß dem Stand der Technik mit zwei Gleichstromquellen **PS1, PS2,** die über eine Busleitung L mit mehreren Verbrauchern (Feldelemente **FE**) elektrisch verbunden sind. Die Busleitung L weist hierzu Abzweigleitungen **A** auf, die zu den Feldelementen FE führen. Tritt in einer solchen Anordnung ein Fehler, bspw. ein Kurzschluss, auf, betrifft dies den ganzen Energiebus, so dass keines der Feldelemente FE weiter betrieben werden kann. Aufgrund der Vielzahl der Feldelemente FE tritt zudem ein hoher Anschaltstrom auf.

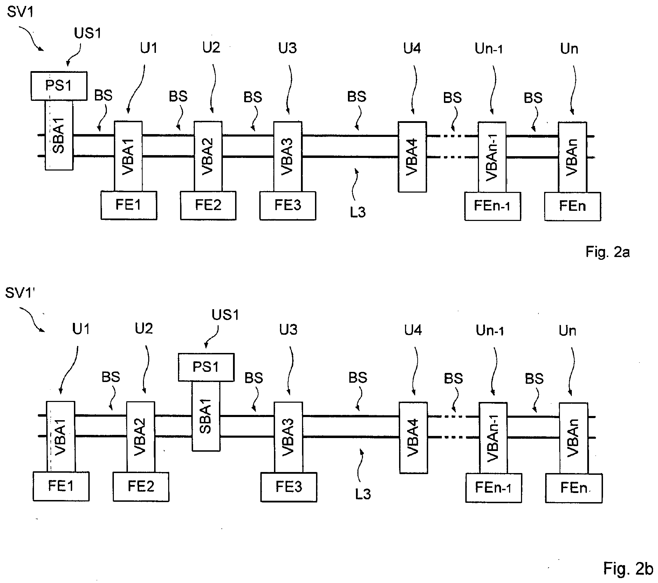

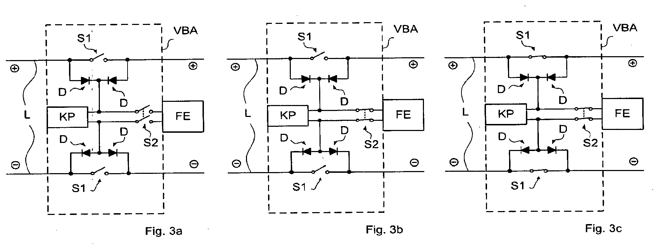

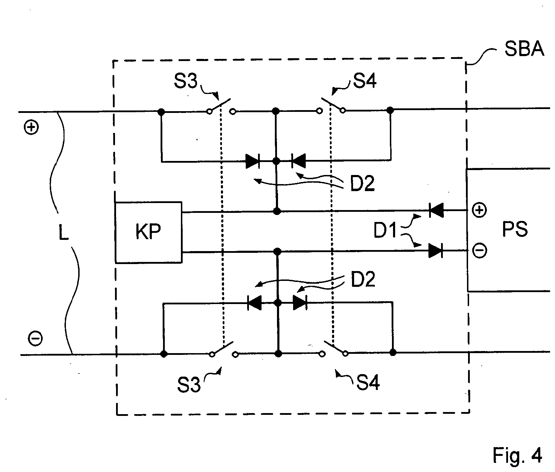

**Fig. 2a, 2b** zeigen zwei Varianten einer Stromversorgungseinrichtung **SV1, SV1',** mit jeweils einem Energiebus, der eine linearen Topologie aufweist. Der Energiebus umfasst eine Busleitung L3, eine erste einseitig einspeisende Gleichstromquelle PS1 sowie ein Einspeise-Busankoppelelement SBA1 mittels welchem Strom in die Busleitung L3 eingespeist wird. In der Busleitung L3 sind Unterbrechungsstellen **U1 ... Un, US1 ... USm** (hier: m=1) vorgesehen, an denen n Verbraucher-Busankoppelelemente **VBA1 ... VBAn** sowie das Einspeise-Busankoppelelement SBA1 die Busleitung L3 in Bussegmente **BS** unterteilen. Die Anzahl s der Bussegmente ist abhängig von der Anzahl n der Verbraucher-Busankoppelelemente und der Anzahl m der Einspeise-Busankoppelelemente. Die Anzahl s der Bussegmente bei einem Energiebus mit linearer Topologie beträgt s = m+n-1. Die Verbraucher **FE1 ... FEn** sind jeweils einem Verbraucher-Busankoppelelement VBA1 ... VBAn nachgeschaltet. Mittels der Verbraucher- und der Einspeise-Busankoppelelemente VBA1 ... VBAn (an Unterbrechungsstellen U1 ... Un), und den Einspeise-Busankoppelemente SBA1 ... SBAm (an Unterbrechungsstellen US1 ... USm) kann eine elektrische Trennung an den entsprechenden Unterbrechungsstellen bewirkt werden (Grundzustand bzw. erster Betriebszustand - siehe Fig. 3a, 3b; beziehungsweise Trennen der Einspeisung siehe Fig. 4). In den gezeigten Beispielen ist dem vierten Verbraucher-Busankoppelelement VBA4 kein Verbraucher nachgeschaltet. Verbraucher-Busankoppelelemente VBA4 ohne nachgeschalteten Verbraucher FE können als Reserve für zukünftig anzuschließende Verbraucher dienen.

In Fig. 2a ist die erste Gleichstromquelle PS1 lediglich mit dem ersten Verbraucher-Busankoppelelement VBA1 direkt verbunden und bilden damit die Grenze des Energiebusses (einseitige Einspeisung).

In Fig. 2b ist die erste Gleichstromquelle PS1 zwischen zwei Verbraucher-Busankoppelelementen VBA2, VBA3 angeordnet. Der Energiebus weist somit eine zweiteilige lineare Topologie auf. Das Einspeise-Busankoppelelement SBA1 kann hier beidseitig den Energiebus betreiben. Diese Eigenschaft kommt auch bei den später beschriebenen ringförmigen Topologien zum Einsatz.

Ein bevorzugter Aufbau eines in einer Busleitung L verbauten Verbraucher-Busankoppelelements VBA ist in **Fig. 3a, 3b** und **3c** gezeigt. Das Verbraucher-Busankoppelelement VBA umfasst Schaltelemente **S1, S2**, Dioden **D** und einen Kleinprozessor **KP.** Die Dioden dienen der Anschaltung des Kleinprozessors KP und des Verbrauchers FE an die Busleitung L. Über die Schaltelemente S1 wird die Busleitung L unterbrochen, mit anderen Worten segmentiert in Bussegmente. Die Schaltelemente S2 dienen dem Zuschalten des Verbrauchers. Die Schaltelemente S1, S2 werden vorzugsweise als Relais oder elektronisches Schaltelement ausgeführt.

Das Verbraucher-Busankoppelelement VBA hat folgende Betriebszustände: Im in Fig. 3a gezeigten Grundzustand wird der Kleinprozessor KP ein- oder zweiseitig von der Busleitung L über die Dioden gespeist. Alle Schaltelemente S1 und S2 sind offen. Im in Fig. 3b gezeigten ersten Betriebszustand wird der Verbraucher FE mittels der zweiten Schaltelemente S2 zugeschaltet. Nach einer zeitlichen Verzögerung wird die Busleitung mit den ersten Schaltelementen S1 durchverbunden, wie in Fig. 3c gezeigt (zweiter Betriebszustand).

Die Stromversorgungseinrichtung, wie bspw. in Fig. 2a gezeigt, wird so betrieben, dass sich zunächst sämtliche Verbraucher-Busankoppelelemente VBA1 ... VBAn im Grundzustand befinden, so dass die Busleitung L3 durch jedes der Verbraucher-Busankoppelelemente VBA1 ... VBAn elektrisch unterbrochen wird. Durch Anschalten des Stroms der Gleichstromquelle PS1 wird daher zunächst nur das der Gleichstromquelle PS1 nächste Verbraucher-Busankoppelelement (erstes Verbraucher-Busankoppelelement VBA1) mit Strom versorgt, so dass das erste Verbraucher-Busankoppelelement VBA1 selber sowie der dem ersten Verbraucher-Busankoppelelement VBA1 nachgeschaltete Verbraucher FE1 angeschaltet werden können. Dabei schaltet sich die Funktionalität des Verbraucher-Busankoppelelements VBA1 mit dem Vorhandensein der Speisung SP1 selbst an. Im Verlaufe dieses Anschaltvorganges wird die Verbraucher-Stromversorgung durch Schließen der zweiten Schaltelementen S2 zugeschaltet. Das Verbraucher-Busankoppelelement VBA1 befindet sich dann im ersten Betriebszustand. Liegen diese Spannungen stabil an, dann schaltet sich die Elektronik des Verbrauchers FE1 zu. Nachdem der Verbraucher FE1 des ersten Verbraucher-Busankoppelelements VBA1 betriebsbereit (angeschaltet/hochgefahren) ist, wird das erste Verbraucher-Busankoppelelement VBA1 in den zweiten Betriebszustand gebracht, d.h. der Bus wird bis zum nächsten (zweiten) Verbraucher-Busankoppelelement VBA2 mittels der Schaltelemente S1 durchgeschaltet, wodurch das nächste Verbraucher-Busankoppelelement (zweites Verbraucher-Busankoppelelement VBA2) mit Strom versorgt wird, usw. Die Verbraucher FE1 ... FEn werden also nacheinander angeschaltet, so dass auch bei Verwendung einer Vielzahl an Verbrauchern FE1 ... FEn nur der geringe Anschaltstrom eines einzelnen Verbrauchers FE1 ... FEn auftritt.

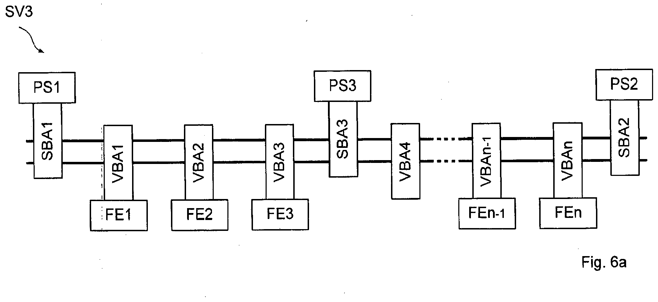

**Fig. 4** zeigt die Grundform des Aufbaus eines Einspeise-Busankoppelelements **SBA**, wobei eine Gleichstromquelle **PS** über das Einspeise-Busankoppelelement SBA mit der Busleitung L verbunden ist. Die Einspeise-Ankopplung erfolgt hier über Dioden **D1**. Diese entkoppeln die Speisung PS bei Rückwärtsenergieeintrag (z.B. durch eine zweite Speisung (s. z.B. Fig. 6a) bei kurzen Leitungen und unterschiedlichen Spannungen). Die Dioden D1 können auch als gesteuerte Schalter implementiert werden. Die Dioden D2 dienen zur Entkopplung der Stromversorgung des Kleinprozessors KP. Schaltelemente **S3** und **S4** dienen zur Trennung der potentialfreien Einspeisung PS von der Busleitung L. Durch eine zeitliche Staffelung der Anschaltung mittels der Schaltelemente S3 und S4 können auch zweiteilig lineare Energiebusse, wie in Fig. 2b gezeigt, sequentiell hochgefahren werden.

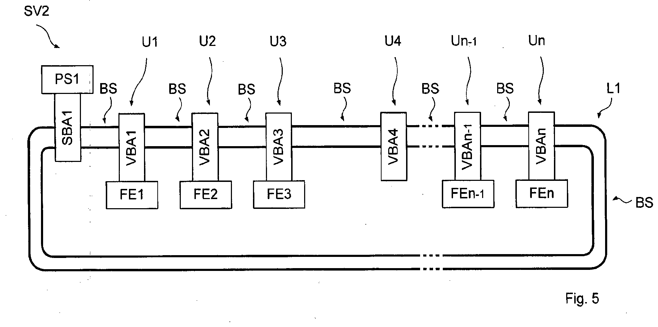

**Fig. 5** zeigt eine zweite Variante der Stromversorgungseinrichtung **SV2**. Im Gegensatz zu der in Fig. 2 gezeigten Stromversorgungseinrichtung SV1 weist der Energiebus der Stromversorgungseinrichtung SV2 gemäß Fig. 5 eine ringförmige Topologie auf. Die Gleichstromquelle PS1 ist dazu über das Einspeise-Busankoppelelement SBA1 sowohl an dem ersten Verbraucher-Busankoppelelement VBA1 als auch an dem n-ten Verbraucher-Busankoppelelement VBAn angeschlossen, so dass eine beidseitige Stromeinspeisung erfolgen kann. Die Busleitung L1 wird durch die Busankoppelelemente SBA1, VBA1 ...VBAn in n+m Bussegmente BS unterteilt.

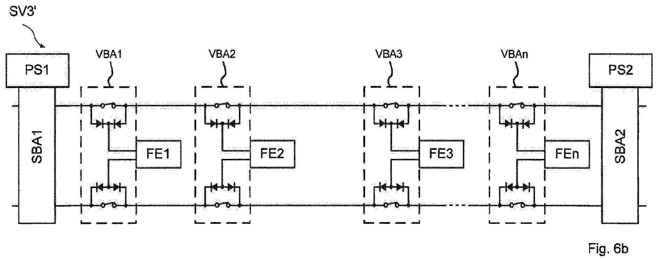

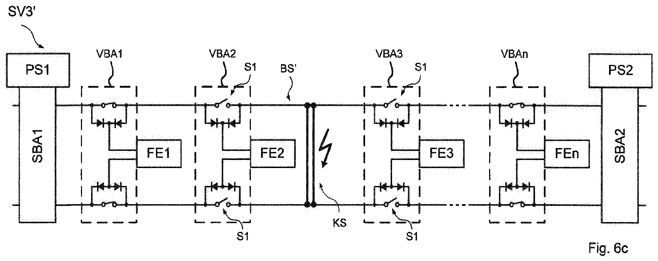

Eine weitere Möglichkeit, wie eine beidseitige Stromeinspeisung realisiert werden kann, ist in **Fig. 6a****-c** gezeigt. Die dort gezeigten Stromversorgungseinrichtungen **SV3, SV3'** umfassen einen Energiebus mit einer linearen Topologie. In Fig. 6a ist eine Variante SV3 mit drei Gleichstromquellen PS1, **PS2, PS3.** In Fig. 6b, c wird eine Ausführungsform SV3' mit zwei Gleichstromquellen PS1, PS2 gezeigt. In beiden Fällen kann jedes Verbraucher-Busankoppelelement VBA1 ... VBAn von zwei Seiten gespeist werden. Das sequentielle Hochfahren erfolgt dann vorzugsweise ausgehend von den beiden Gleichstromquellen PS1, PS2 gleichzeitig von beiden Seiten des Energiebusses. Dazu ist das erste Verbraucher-Busankoppelelement VBA1 über das Einspeise-Busankoppelelement SBA1 an der ersten Gleichstromquelle PS1 und das n-te Verbraucher-Busankoppelelement VBAn über ein weiteres Einspeise-Busankoppelelement SBA2 an der weiteren Gleichstromquellen PS2 angeschlossen. Im Fall eines Fehlers (Kurzschluss KS) im Bussegment BS' (Fig. 6c), kann das betreffende Bussegment BS' isoliert werden, indem die benachbarten Verbraucher-Busankoppelelemente (hier: Verbraucher-Busankoppelelemente VBA2, VBA3) durch Öffnen der Schaltelemente S1 in den ersten Betriebszustand gebracht werden, wie in **Fig. 6c** gezeigt. Die Verbraucher FE1, FE2 können dann über die erste Gleichstromquelle PS1, die Verbraucher FE3 ... FEn über die weitere Gleichstromquelle PS2 versorgt werden (Fehlerbehebung erster Stufe).

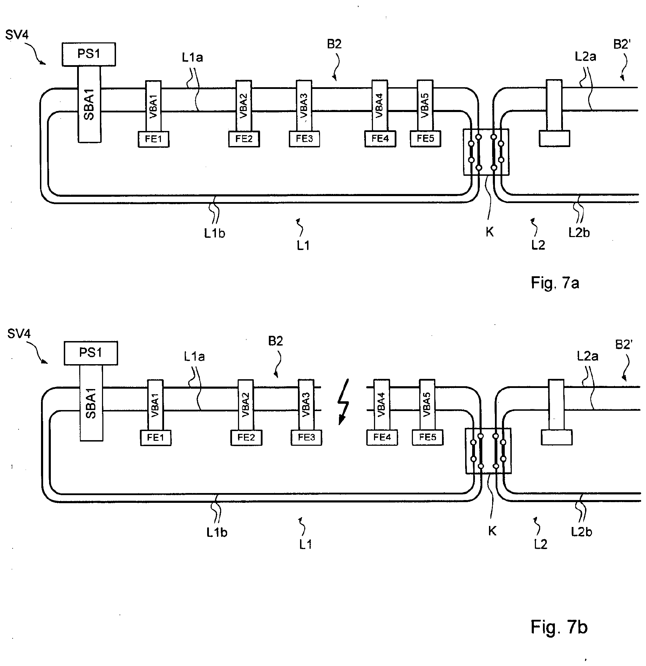

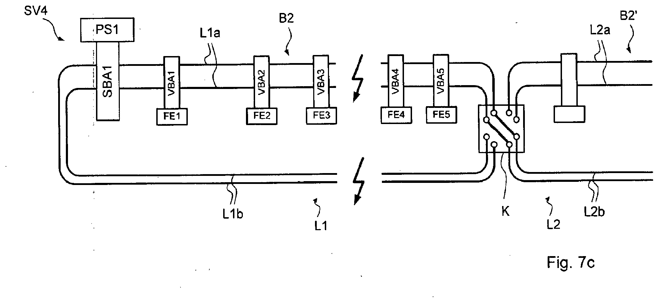

In den **Fig. 7a****-c** ist eine Ausführungsform der erfindungsgemäßen Stromversorgungseinrichtung **SV4** gezeigt, bei der ein erster Energiebus B2 mit einer Busleitung **L1** mit einem zweiten Energiebus B2' mit einer Busleitung **L2** mittels einer Buskoppeleinheit **K** elektrisch gekoppelt sind. Die Busleitungen L1, L2 werden dabei durch die Buskoppeleinheit K jeweils in einen Hauptleitungsabschnitt **L1a, L2a,** in dem mindestens zwei Verbraucher-Busankoppelelemente VBA1, ..., VBA5 angeordnet sind, und einen Rückleitungsabschnitt **L1b, L2b,** in dem nicht notwendigerweise Verbraucher-Busankoppelelemente angeordnet sind, unterteilt. An den Verbraucher-Busankoppelelementen VBA1, ..., VBA5 sind Verbraucher FE1,..., FE5 angeschlossen. Beide Energiebusse B2, B2' weisen eine ringförmige Topologie gemäß Fig. 5 auf. In Fig. 7b ist der Fall dargestellt, dass ein Segment des Hauptleitungsabschnitts L1a aufgrund eines aufgetretenen Fehlers isoliert wurde (Fehlerbehebung erster Stufe). Aufgrund der Kopplung mittels der Buskoppeleinheit K können die Verbraucher-Busankoppelelemente VBA1, ..., VBA5 und die an diesen angeschlossenen Verbraucher FE1,..., FE5 im Hauptleitungsabschnitt L1a auch bei einem zusätzlich im Rückleitungsabschnitt L1b auftretenden Fehler, wie in Fig. 7c dargestellt, weiter betrieben werden. Hierfür werden die aufgrund des Fehlers im Hauptleitungsabschnitt L1a und Rückleitungsabschnitt L1b nicht über die erste Gleichstromquelle PS1 versorgbaren Verbraucher-Busankoppelelemente VBA4, VBA5 des ersten Energiebusses B2 mittels der Buskoppeleinheit K mit dem zweiten Energiebus B2' elektrisch verbunden, (Fehlerbehebung zweiter Stufe).

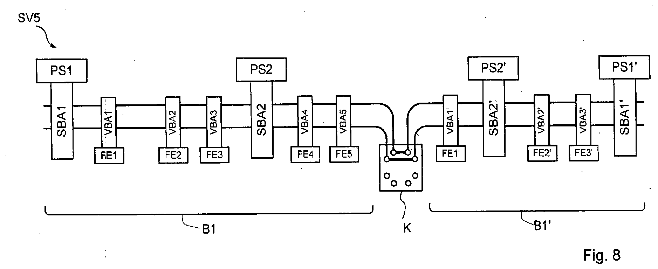

In **Fig. 8** ist eine Ausführungsform der erfindungsgemäßen Stromversorgungseinrichtung **SV5** dargestellt, bei der mittels der Buskoppeleinheit K zwei Energiebusse **B1**, **B1'** mit linearer Topologie und jeweils zwei Gleichstromquellen PS1, PS2, **PS1', PS2'** elektrisch gekoppelt sind.

Am ersten Energiebus B1 sind fünf Verbraucher-Busankoppelelemente VBA1 ... VBA5 angeschlossen, wobei die erste Gleichstromquelle PS1 lediglich mit dem ersten Verbraucher-Busankoppelelement VBA1 direkt elektrisch verbunden ist) und somit nur in eine Richtung Strom einspeist. Die weitere Gleichstromquelle PS2 ist zwischen dem dritten Verbraucher-Busankoppelelement VBA3 und dem vierten Verbraucher-Busankoppelelement VBA4 angeordnet (also sowohl mit dem dritten Verbraucher-Busankoppelelement VBA3 als auch mit dem vierten Verbraucher-Busankoppelelement VBA4 direkt elektrisch verbunden), so dass eine Einspeisung in zwei Richtungen erfolgt. Der zweite Energiebus B1' umfasst zwei Gleichstromquellen PS1', PS2' und drei Verbraucher-Busankoppelelementen VBA1' ... VBA3', an denen jeweils ein Verbraucher FE1' ... FE3' angeschlossen ist. Auch bei dieser Ausführungsform können aufgrund der Kopplung mittels der Buskoppeleinheit K die Verbraucher-Busankoppelelemente VBA1 ... VBA5, VBA1' ... VBA3' und die an diesen angeschlossenen Verbraucher bei einem auftretenden Fehler weiter betrieben werden. Insbesondere können die Verbraucher-Busankoppelelemente VBA4, VBA5, VBA1' von der Stromquelle PS2, PS2' des jeweiligen anderen Energiebusses B1, B1' mit Strom versorgt werden (Fehlerbehebung erster Stufe).

Diese Ausführungsform der Stromversorgungseinrichtung beherrscht auch weitere zusätzliche Fehler (Fehlerbehebung höherer Stufen). Beispielhaft sei der Ausfall der Gleichstromquelle PS2 im ersten Energiebus B1 beschrieben. Bei Verlust der Spannung isolieren Dioden im Einspeise-Busankoppelelement SBA2 (entsprechend den Dioden D1 im Einspeise-Busankoppelelement SBA in Fig.4) die Spannungsquelle PS2 von der Busleitung. Die Schaltelemente S3 und S4, kontrolliert durch den Kleinprozessor KP (s. Fig. 4), bleiben geschlossen. Auch bei offenem Koppler K des Einspeise-Busankoppelelements SBA2 werden somit die Verbraucher-Busankoppelelemente VBA4 und VBA5 von der ersten Gleichstromquelle PS1 versorgt.

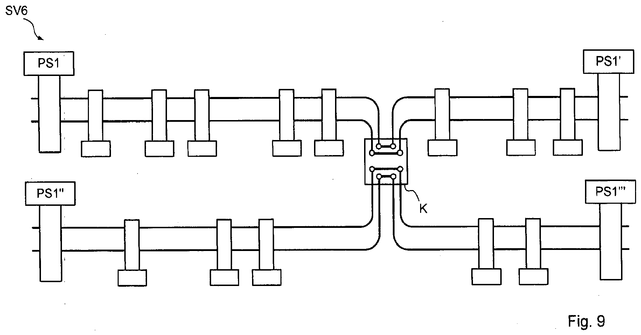

In **Fig. 9** ist eine Ausführungsform der erfindungsgemäßen Stromversorgungseinrichtung **SV6** dargestellt, bei der beispielhaft vier Energiebusse mit linearer Topologie und jeweils einer Gleichstromquelle PS1, PS1', **PS1", PS1"'** sternförmig durch die Koppeleinheit K elektrisch verbunden sind. Eine derartige "sternförmige" Kopplung ist allgemein mit n Energiebussen, mit n>2 möglich, wobei eine sternförmig gekoppelten Stromversorgungseinrichtung sowohl Energiebusse mit linearer als auch mit ringförmiger Topologie umfassen kann. Die Koppeleinheit K muss entsprechend der Anzahl und Topologie der zu koppelnden Energiebusse eine ausreichende Anzahl an Anschlüssen aufweisen.

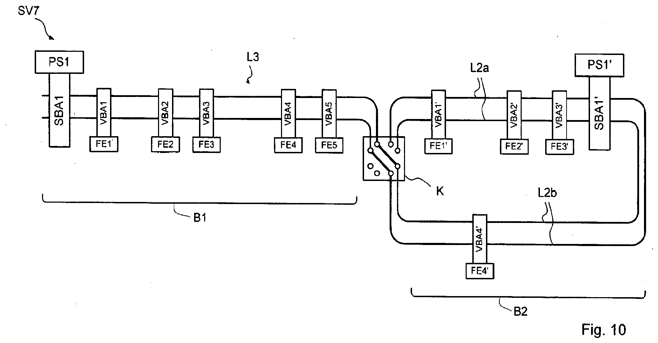

**Fig. 10** zeigt eine Ausführungsform der erfindungsgemäßen Stromversorgungseinrichtung **SV7,** bei der ein Energiebus B1 mit linearer Topologie (analog Fig. 2) mit einem Energiebus B2 mit ringförmiger Topologie (analog Fig. 5) mittels der Buskoppeleinheit K gekoppelt ist. Beide Energiebusse B1, B2 umfassen jeweils eine Gleichstromquelle PS1, PS1'. An der Busleitung L3 des ersten Energiebusses B1 sind fünf Verbraucher-Busankoppelelemente VBA1, ..., VBA5 angeschlossen. Im zweiten Energiebus B2 sind vier Verbraucher-Busankoppelelemente VBA1', ..., VBA4' angeordnet, wobei sich das Verbraucher-Busankoppelelement VBA4' nicht im Hauptleitungsabschnitt L2a sondern im Rückleitungsabschnitt L2b der Busleitung L2 befindet. Mit dieser Ausführungsform sind Fehlerbehebungen erster und zweiter Stufe möglich. Die Buskoppeleinheit K kann alle möglichen kombinatorischen Positionen (zwischen den genutzten Anschlüssen) einnehmen.

Alle Ausführungsformen umfassen einen segmentierten Energiebus, wobei die Segmentierung durch Verbraucher-Busankoppelelemente und Einspeise-Busankoppelelemente realisiert wird, welche von einem Grundzustand, in dem die an das jeweilige Busankoppelelement angrenzenden Segmente der Busleitung elektrisch voneinander getrennt sind, in einen zweiten Betriebszustand gebracht werden können, in dem diese Segmente elektrisch miteinander verbunden sind. Die schaltbare Segmentierung ist ein wesentliches Leistungsmerkmal zur Lokalisierung von Leitungsstörungen (Diagnosefunktion).

### Bezugszeichenliste

- A: Abzweigleitungen
- B1, B1': Energiebus mit linearer Topologie
- B2, B2': Energiebus mit ringförmiger Topologie
- BS: Bussegment, Segmente der Busleitung
- D, D1, D2: Dioden
- FE: Verbraucher (Feldelement)
- FE, FE1 ..FEn: Verbraucher eines ersten Energiebusses
- FE1' ..FE3': Verbraucher eines zweiten Energiebusses
- K: Buskoppeleinheit
- KP: Kleinprozessor
- KS: Kurzschluss
- L: Busleitung (2-polig)
- L1, L2: Busleitungen eines Energiebusses mit ringförmiger Topologie
- L3: Busleitungen von Energiebussen mit linearer Topologie
- L1a, L2a: Hauptleitungsabschnitte der Busleitungen (ringförmige Topologie)
- L1b, L2b: Rückleitungsabschnitte der Busleitungen (ringförmige Topologie)
- PS, PS1, PS2, PS3: Einspeisungen (Gleichstromquellen) eines ersten Energiebusses
- PS1', PS2': Einspeisungen (Gleichstromquellen) eines zweiten Energiebusses
- PS1": Einspeisung (Gleichstromquelle) eines dritten Energiebusses
- PS1'": Einspeisung (Gleichstromquelle) eines vierten Energiebusses
- SV1: Stromversorgungseinrichtung mit einer Gleichstromquelle und linearer Bustopologie
- SV2: Stromversorgungseinrichtung mit einer Gleichstromquelle und ringförmiger Bustopologie
- SV3, SV3': Stromversorgungseinrichtung mit mehreren Gleichstromquellen und linearer Bustopologie
- SV4, SV5, SV6, SV7: Stromversorgungseinrichtungen mit gekoppelten Energiebussen
- S1, S2: Schaltelemente der Verbraucher-Busankoppelelemente
- S3, S4: Schaltelemente der Einspeise-Busankoppelelemente
- SBA, SBA': Einspeise-Busankoppelelemente
- SBA1,SBA2,: Einspeise-Busankoppelelemente des ersten Energiebusses
- SBA1', SBA2': Einspeise-Busankoppelelemente des zweiten Energiebusses
- SBA1", SBA2": Einspeise-Busankoppelelemente des dritten Energiebusses der sternförmigen Stromversorgungseinrichtung
- SBA1", SBA2'": Einspeise-Busankoppelelemente des vierten Energiebusses der sternförmigen Stromversorgungseinrichtung
- U, U1 ... Un: Unterbrechungsstellen der Verbraucher-Busankoppelelemente
- US1 ... USm: Unterbrechungsstellen der Einspeise-Busankoppelelemente
- VBA: Verbraucher-Busankoppelelemente
- VBA1 ... VBAn: Verbraucher-Busankoppelelemente des ersten Energiebusses
- VBA1' ... VBAn': Verbraucher-Busankoppelelemente des zweiten Energiebusses

## Patentansprüche

1. Stromversorgungseinrichtung (SV1; SV2; SV3; SV3'; SV4; SV5; SV6; SV7) zur Versorgung mehrerer Verbraucher (FE, FE1, ... FEn) mit Gleichstrom, wobei die Verbraucher (FE; FE1, ... FEn) Komponenten der Leit- und Sicherungstechnik sind und jeweils eine Logik oder einen Prozessor umfassen,
wobei die Stromversorgungseinrichtung einen ersten Energiebus aufweist, der eine aufeinanderfolgende Anordnung mehrerer Verbraucher entlang einer 2-poligen Busleitung und eine Gleichstromquelle (PS1; PS2; PS3) umfasst, mit welcher die Verbraucher über die Busleitung verbindbar sind, wobei die Verbraucher über die Busleitung parallel zu der Gleichstromquelle geschaltet sind,
wobei die Busleitung (L1; L3) durch Verbraucher-Busankoppelelemente (VBA; VBA1, ... VBAn) in Bussegmente (BS) unterteilt ist, wobei mindestens einer der Verbraucher (FE; FE1, ... FEn) an einem der Verbraucher-Busankoppelelemente (VBA; VBA1, ... VBAn) angeschlossen ist,
wobei jedes Verbraucher-Busankoppelelement (VBA; VBA1 ... VBAn) sowohl an der negativen als auch an der positiven Potentialseite der Busleitung (L) jeweils ein erstes Schaltelement (S1, S2) zur elektrischen Trennung der Busleitung (L1; L3) und ein zweites Schaltelement (S2) zum Zuschalten des Verbrauchers (FE) zum Energiebus umfasst, wobei die ersten Schaltelemente (S1) Teil der Busleitung (L1) sind und die zweiten Schaltelemente (S2, S3) Teil einer von der Busleitung (L1) zum Verbraucher (FE) führenden Versorgungsleitung sind, so dass die Busankoppelelemente (VBA; VBA1, ... VBAn) jeweils in folgende Zustände gebracht werden können:
in einen Grundzustand, in dem die Busleitung (L1; L3) durch das entsprechende Verbraucher-Busankoppelelement (VBA; VBA1, ... VBAn) elektrisch unterbrochen ist und der Verbraucher vom Bus getrennt ist,
in einen ersten Betriebszustand, in dem die Busleitung (L1; L3) durch das entsprechende Verbraucher-Busankoppelelement (VBA; VBA1, ... VBAn) elektrisch unterbrochen ist und der Verbraucher (FE) zugeschaltet ist, und
in einen zweiten Betriebszustand, in dem die Bussegmente (BS) durch das entsprechende Verbraucher-Busankoppelelement (VBA; VBA1, ... VBAn) elektrisch verbunden sind,
wobei die Stromversorgungseinrichtung einen zweiten Energiebus aufweist, der eine aufeinanderfolgende Anordnung mehrerer Verbraucher entlang einer 2-poligen Busleitung und eine Gleichstromquelle (PS1'; PS2') umfasst, und
wobei zusätzlich zu den Busankoppelelementen eine Buskoppeleinheit (K) vorhanden ist, die zum wahlweisen Koppeln des ersten Energiebusses (B1, B2) mit dem zweiten Energiebus (B1', B2') ausgebildet ist,
**dadurch gekennzeichnet,**
**dass** das Verbraucher-Busankoppelelement weiter umfasst:
• einen Kleinprozessor (KP) zum Anschalten und Überwachen der Stromversorgung des Verbrauchers (FE),
• Elektronik zur Leitungsdiagnose,
• Filter und Schutzeinrichtungen, sowie
• Dioden (D) oder gesteuerte Schalter, die der Anschaltung des Kleinprozessors (KP) und des Verbrauchers (FE) an die Busleitung L dienen,
**dass** das Verbraucher-Busankoppelelement dazu eingerichtet ist, den Kleinprozessor im Grundzustand ein- oder zweiseitig von der Busleitung L über die Dioden oder gesteuerte Schalter zu speisen,
**dass** das Verbraucher-Busankoppelelement dazu eingerichtet ist, die Busleitung mit den ersten Schaltelementen S1 nach einer zeitlichen Verzögerung nach Erreichen des ersten Betriebszustands durchzuverbinden.

2. Stromversorgungseinrichtung (SV1, SV2, SV3, SV3', SV4, SV5, SV6; SV7) nach Anspruch 1, **dadurch gekennzeichnet, dass** es sich bei den Verbrauchern (FE1 ... FEn) um Feldelemente handelt.

3. Stromversorgungseinrichtung (SV1, SV3, SV3', SV5, SV6) nach einem der Ansprüche 1 oder 2, **dadurch gekennzeichnet, dass** der erste Energiebus (B1) eine lineare Topologie aufweist und seine Gleichstromquelle (PS1) die einzige Gleichstromquelle des ersten Energiebusses (B1) ist.

4. Stromversorgungseinrichtung (SV2, 5V4) nach einem der Ansprüche 1 oder 2, **dadurch gekennzeichnet, dass** das erste (FE1) und das n-te Verbraucher-Busankoppelelement (FE1, FEn) des ersten Energiebusses direkt mit der Gleichstromquelle (PS1) des ersten Energiebusses verbunden sind, so dass die Busleitung (L1) eine erste ringförmige Topologie aufweist.

5. Stromversorgungseinrichtung (SV3, SV3') nach einem der Ansprüche 1, 2 oder 4, **dadurch gekennzeichnet, dass** die Busleitung (L1) des ersten Energiebusses mit einer weiteren Gleichstromquelle (PS2, PS3) elektrisch verbunden ist.

6. Stromversorgungseinrichtung (SV3, SV3') nach Anspruch 5, **dadurch gekennzeichnet, dass** eines der Verbraucher-Busankoppelelemente (FE1 ... FEn), vorzugsweise das n-te Verbraucher-Busankoppelelement (VBAn) direkt mit der weiteren

7. Gleichstromquelle (PS2, PS3) verbunden ist. Stromversorgungseinrichtung (SV4) nach einem der Ansprüche 1 bis 6, **dadurch gekennzeichnet, dass** der erste Energiebus (B2) und der zweite Energiebus (B2') eine ringförmige Topologie aufweisen.

8. Stromversorgungseinrichtung (SV5) nach einem der Ansprüche 1 bis 6, **dadurch gekennzeichnet, dass** der erste Energiebus (B1) und der zweite Energiebus (B1') eine lineare Topologie aufweisen.

9. Stromversorgungseinrichtung (SV6) nach einem der Ansprüche 1 bis 6, **dadurch gekennzeichnet, dass** ein Energiebus (B2, B2') mit ringförmiger Topologie und ein Energiebus mit linearer Topologie (B1, B1') durch die Buskoppeleinheit miteinander gekoppelt sind.

10. Verfahren zum Betreiben einer Stromversorgungseinrichtung nach einem der vorhergehenden Ansprüche, insbesondere in der Bahntechnik, **dadurch gekennzeichnet, dass** die Verbraucher-Busankoppelelemente (VBA1 ... VBAn) sequentiell vom Grundzustand zunächst durch Schließen der zweiten Schaltelemente (S2) in den ersten Betriebszustand, und dann nach einer zeitlichen Verzögerung durch Schließen der ersten Schaltelemente (S1) in den zweiten Betriebszustand gebracht werden, so dass die Verbraucher-Busankoppelelemente (VBA1 ... VBAn) sequentiell durch Versorgung mit Strom der Gleichstromquelle (PS1, PS2, PS3) angeschaltet werden.

11. Verfahren nach Anspruch 10, **dadurch gekennzeichnet, dass** der Strom von der Gleichstromquelle (PS1, PS2, PS3, PS1', PS2') beidseitig in die Busleitung (L1, L2) eingespeist wird.

12. Verfahren nach Anspruch 11, **dadurch gekennzeichnet, dass** zur beidseitigen Einspeisung mindestens eine weitere Gleichstromquelle (PS2, PS2', PS3) verwendet wird.

13. Verfahren nach Anspruch 11, **dadurch gekennzeichnet, dass** zur beidseitigen Einspeisung ein Energiebus (B2, B2') mit einer ringförmigen Topologie und einer einzigen Gleichstromquelle (PS1, PS1') verwendet wird.

14. Verfahren nach einem der Ansprüche 10 bis 13, **dadurch gekennzeichnet, dass** im Falle eines defekten Segments (BS) der Busleitung (L1), die an dem defekten Segment (BS) angrenzenden Verbraucher-Busankoppelelemente (VBA3, VBA4) in den ersten Betriebszustand versetzt werden.

## Claims

1. Power supply device (SV1; SV2; SV3; SV3'; SV4; SV5; SV6; SV7) for supplying a DC current to a plurality of loads (FE, FE1, ..., FEn), the loads (FE; FE1, ..., FEn) being control and safety technology components and each comprising a logic unit or a processor,
the power supply device having a first energy bus which comprises a successive arrangement of a plurality of loads along a 2-pole bus line and comprises a DC power source (PS1; PS2; PS3) to which the loads can be connected via the bus line, the loads being connected in parallel with the DC power source via the bus line,
the bus line (L1; L3) being subdivided into bus segments (BS) by load-bus coupling elements (VBA; VBA1 ... VBAn), at least one of the loads (FE; FE1 ... FEn) being connected to one of the load-bus coupling elements (VBA; VBA1 ... VBAn),
each load-bus coupling element (VBA; VBA1 ... VBAn), on the negative and on the positive potential side of the bus line (L), in each case comprising a first switching element (S1, S2) for electrically isolating the bus line (L1; L3) and a second switching element (S2) for connecting the load (FE) to the energy bus, the first switching elements (S1) being part of the bus line (L1) and the second switching elements (S2, S3) being part of a supply line which leads from the bus line (L1) to the load (FE), such that the bus coupling elements (VBA; VBA1 ... VBAn) can each be brought into the following states:
a basic state, in which the bus line (L1; L3) is electrically interrupted by the corresponding load-bus coupling element (VBA; VBA1 ... VBAn) and the load is disconnected from the bus,
a first operating state, in which the bus line (L1; L3) is electrically interrupted by the corresponding load-bus coupling element (VBA; VBA1 ... VBAn) and the load (FE) is connected, and
a second operating state, in which the bus segments (BS) are electrically connected by the corresponding load-bus coupling element (VBA; VBA1 ... VBAn),
the power supply device having a second energy bus which comprises a successive arrangement of a plurality of loads along a 2-pole bus line and comprises a DC power source (PS1'; PS2'), and,
in addition to the bus coupling elements, a bus coupling unit (K) being provided, which is designed to selectively couple the first energy bus (B1, B2) to the second energy bus (B1', B2'),
**characterized in that**
the load-bus coupling element further comprises:
• a small processor (KP) for switching on and monitoring the power supply of the load (FE),
• electronics for line diagnosis,
• filters and protective devices, and
• diodes (D) or controlled switches, which are used to connect the small processor (KP) and the load (FE) to the bus line L,
that the load-bus coupling element is designed to feed the small processor from the bus line L via the diodes or controlled switches on one or two sides in the basic state, and
that the load-bus coupling element is designed to connect the bus line through to the first switching elements S1 after a time delay after reaching the first operating state.

2. Power supply device (SV1, SV2, SV3, SV3', SV4, SV5, SV6; SV7) according to claim 1, **characterized in that** the loads (FE1 ... FEn) are field elements.

3. Power supply device (SV1, SV3, SV3', SV5, SV6) according to either claim 1 or claim 2, **characterized in that** the first energy bus (B1) has a linear topology, and the DC power source (PS1) thereof is the only DC power source of the first energy bus (B1).

4. Power supply device (SV2, SV4) according to either claim 1 or claim 2, **characterized in that** the first (FE1) and the nth load-bus coupling elements (FE1, FEn) of the first energy bus are directly connected to the DC power source (PS1) of the first energy bus such that the bus line (L1) has a first annular topology.

5. Power supply device (SV3, SV3') according to any of claims 1, 2 or 4, **characterized in that** the bus line (L1) of the first energy bus is electrically connected to an additional DC power source (PS2, PS3).

6. Power supply device (SV3, SV3') according to claim 5, **characterized in that** one of the load-bus coupling elements (FE1 ... FEn), preferably the nth load-bus coupling element (VBAn), is directly connected to the additional DC power source (PS2, PS3).

7. Power supply device (SV4) according to any of claims 1 to 6, **characterized in that** the first energy bus (B2) and the second energy bus (B2') have an annular topology.

8. Power supply device (SV5) according to any of claims 1 to 6, **characterized in that** the first energy bus (B1) and the second energy bus (B1') have a linear topology.

9. Power supply device (SV6) according to any of claims 1 to 6, **characterized in that** an energy bus (B2, B2') having an annular topology and an energy bus having a linear topology (B1, B1') are coupled to one another by the bus coupling unit.

10. Method for operating a power supply device according to any of the preceding claims, in particular in rail technology, **characterized in that** the load-bus coupling elements (VBA1 ... VBAn) are sequentially first brought from the basic state into the first operating state by closing the second switching elements (S2), and then, after a time delay, brought into the second operating state by closing the first switching elements (S1), such that the load-bus coupling elements (VBA1 ... VBAn) are turned on sequentially by supplying power to the DC power source (PS1, PS2, PS3).

11. Method according to claim 10, **characterized in that** the power from the DC power source (PS1, PS2, PS3, PS1', PS2') is fed into the bus line (L1, L2) on both sides.

12. Method according to claim 11, **characterized in that** at least one additional DC power source (PS2, PS2', PS3) is used for feeding in on both sides.

13. Method according to claim 11, **characterized in that** an energy bus (B2, B2') which has an annular topology and a single DC power source (PS1, PS1') is used for feeding in on both sides.

14. Method according to any of claims 10 to 13, **characterized in that**, if the bus line (L1) has a defective segment (BS), the load-bus coupling elements (VBA3, VBA4) which adjoin the defective segment (BS) are put into the first operating state.

## Revendications

1. Dispositif d'alimentation électrique (SV1 ; SV2 ; SV3 ; SV3'; SV4 ; SV5 ; SV6 ; SV7) pour alimenter plusieurs consommateurs (FE, FE1, ...., FEn) en courant continu, les consommateurs (FE ; FE1, ..., FEn) étant des composants de la technique de commande et de signalisation et comprenant chacun une logique ou un processeur,
le dispositif d'alimentation électrique présentant un premier bus d'énergie qui comprend un agencement successif de plusieurs consommateurs le long d'une ligne de bus bipolaire et une source de courant continu (PS1 ; PS2 ; PS3) auquel les consommateurs peuvent être reliés via la ligne de bus,
les consommateurs étant connectés en parallèle à la source de courant continu via la ligne de bus,
la ligne de bus (L1 ; L3) étant subdivisée en segments de bus (BS) par des éléments de couplage bus de consommateur (VBA ; VBA1 ... VBAn), au moins l'un des consommateurs (FE ; FE1 ... FEn) étant connecté à l'un des éléments de couplage bus de consommateur (VBA ; VBA1 ... VBAn),
chaque élément de couplage bus de consommateur (VBA; VBA1 ... VBAn) comprenant à chaque fois, aussi bien du côté négatif que du côté positif du potentiel de la ligne de bus (L), un premier élément de commutation (S1, S2) pour isoler électriquement la ligne de bus (L ; L3) et un deuxième élément de commutation (S2) pour connecter le consommateur (FE) au bus d'énergie, les premiers éléments de commutation (S1) faisant partie de la ligne de bus (L1) et les deuxièmes éléments de commutation (S2, S3) faisant partie d'une ligne d'alimentation allant de la ligne de bus (L1) au consommateur (FE), de sorte que les éléments de couplage bus (VBA ; VBA1... VBAn) peuvent être mis chacun dans les états suivants :
dans un état de base dans lequel la ligne de bus (L1 ; L3) est interrompue électriquement par l'élément de couplage bus de consommateur (VBA; VBA1 ... VBAn) correspondant et le consommateur est déconnecté du bus,
dans un premier état de fonctionnement dans lequel la ligne de bus (L1 ; L3) est interrompue électriquement par l'élément de couplage bus de consommateur (VBA ; VBA1 ... VBAn) correspondant et le consommateur (FE) est connecté, et
dans un deuxième état de fonctionnement dans lequel les segments de bus (BS) sont reliés électriquement par l'élément de couplage bus de consommateur (VBA ; VBA1... VBAn) correspondant,
le dispositif d'alimentation électrique présentant un deuxième bus d'énergie qui comprend un agencement successif de plusieurs consommateurs le long d'une ligne de bus bipolaire et une source de courant continu (PS1' ; PS2'), et
en plus des éléments de couplage bus, une unité de couplage bus (K) étant prévue, qui est conçue pour coupler sélectivement le premier bus d'énergie au deuxième bus d'énergie (B1', B2'),
**caractérisé en ce**
**que** l'élément de couplage bus de consommateur comprend en outre :
• un petit processeur (KP) pour le raccordement et la surveillance de l'alimentation électrique du consommateur (FE),
• une électronique pour le diagnostic de la ligne,
• des filtres et des dispositifs de protection, ainsi que
• des diodes (D) ou des commutateurs commandés qui servent à raccorder le petit processeur (KP) et le consommateur (FE) à la ligne de bus L,
**que** l'élément de couplage bus de consommateur est conçu pour alimenter le petit processeur dans l'état de base, d'un côté ou des deux côtés, à partir de la ligne de bus L, via les diodes ou les commutateurs commandés,
**que** l'élément de couplage bus de consommateur est conçu pour relier la ligne de bus aux premiers éléments de commutation S1 après un retard dans le temps après avoir atteint le premier état de fonctionnement.

2. Dispositif d'alimentation électrique (SV1, SV2, SV3, SV3', SV4, SV5, SV6 ; SV7) selon la revendication 1, **caractérisé en ce que** les consommateurs (FE1 ... FEn) sont des éléments de voie.

3. Dispositif d'alimentation électrique (SV1, SV3, SV3', SV5, SV6) selon l'une des revendications 1 ou 2, **caractérisé en ce que** le premier bus d'énergie (B1) présente une topologie linéaire et sa source de courant continu (PS1) est la seule source de courant continu du premier bus d'énergie (B1).

4. Dispositif d'alimentation électrique (SV2, SV4) selon l'une des revendications 1 ou 2, **caractérisé en ce que** le premier (FE1) et le nième élément de couplage bus de consommateur (FE1, FEn) du premier bus d'énergie sont directement reliés à la source de courant continu (PS1) du premier bus d'énergie, de sorte que la ligne de bus (L1) présente une première topologie en anneau.

5. Dispositif d'alimentation électrique (SV3, SV3') selon l'une des revendications 1, 2 ou 4, **caractérisé en ce que** la ligne de bus (L1) du premier bus d'énergie est reliée électriquement à une autre source de courant continu (PS2, PS3).

6. Dispositif d'alimentation électrique (SV3, SV3') selon la revendication 5, **caractérisé en ce que** l'un des éléments de couplage bus de consommateur (FE1... FEn), de préférence le nième élément de couplage bus de consommateur (VBAn), est directement relié à l'autre source de courant continu (PS2, PS3).

7. Dispositif d'alimentation électrique (SV4) selon l'une des revendications 1 à 6, **caractérisé en ce que** le premier bus d'énergie (B2) et le deuxième bus d'énergie (B2') présentent une topologie en anneau.

8. Dispositif d'alimentation électrique (SV5) selon l'une des revendications 1 à 6, **caractérisé en ce que** le premier bus d'énergie (B1) et le deuxième bus d'énergie (B1') présentent une topologie linéaire.

9. Dispositif d'alimentation électrique (SV6) selon l'une des revendications 1 à 6, **caractérisé en ce qu'**un bus d'énergie (B2, B2') ayant une topologie en anneau et un bus d'énergie ayant une topologie linéaire (B1, B1') sont couplés ensemble par l'unité de couplage bus.

10. Procédé pour faire fonctionner un dispositif d'alimentation électrique selon l'une des revendications précédentes, en particulier dans la technique ferroviaire,
**caractérisé en ce**
**que** les éléments de couplage bus de consommateur (VBA1 ... VBAn) sont passés séquentiellement de l'état de base d'abord dans le premier état de fonctionnement par fermeture des deuxièmes éléments de commutation (S2), puis, après un retard dans le temps, dans le deuxième état de fonctionnement par fermeture des premiers éléments de commutation (S1), de sorte que les éléments de couplage bus de consommateur (VBA1 ... VBAn) sont raccordés séquentiellement par alimentation en courant de la source de courant continu (PS1, PS2, PS3).

11. Procédé selon la revendication 10, **caractérisé en ce que** le courant de la source de courant continu (PS1, PS2, PS3, PS1', PS2') est injecté des deux côtés dans la ligne de bus (L1, L2).

12. Procédé selon la revendication 11, **caractérisé en ce qu'**au moins une autre source de courant continu (PS2, PS2', PS3) est utilisée pour l'injection des deux côtés.

13. Procédé selon la revendication 11, **caractérisé en ce qu'**un bus d'énergie (B2, B2') avec une topologie en anneau et une seule source de courant continu (PS1, PS1') sont utilisés pour l'injection des deux côtés.

14. Procédé selon l'une des revendications 10 à 13, **caractérisé en ce que**, dans le cas d'un segment défectueux (BS) de la ligne de bus (L1), les éléments de couplage bus de consommateur (VBA3, VBA4) adjacents au segment défectueux (BS) sont mis dans le premier état de fonctionnement.
